(19) 

**Europäisches Patentamt**
**European Patent Office**
**Office européen des brevets**

(11) **EP 4 561 188 A1**

(12) **EUROPEAN PATENT APPLICATION**
published in accordance with Art. 153(4) EPC

(43) Date of publication:
**28.05.2025 Bulletin 2025/22**

(21) Application number: **23842261.2**

(22) Date of filing: **17.07.2023**

(51) International Patent Classification (IPC):
**H04W 52/02** (2009.01)

(52) Cooperative Patent Classification (CPC):
**H04L 5/00; H04W 52/02**

(86) International application number:
**PCT/CN2023/107718**

(87) International publication number:
**WO 2024/017198 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.07.2022   CN 202210845341**

(71) Applicant: **Vivo Mobile Communication Co., Ltd.**
**Dongguan, Guangdong 523863 (CN)**

(72) Inventors:
• **WU, Kai**
  **Dongguan, Guangdong 523863 (CN)**
• **LI, Dongru**
  **Dongguan, Guangdong 523863 (CN)**
• **PAN, Xueming**
  **Dongguan, Guangdong 523863 (CN)**
• **JI, Zichao**
  **Dongguan, Guangdong 523863 (CN)**

(74) Representative: **Lavoix**
**Bayerstraße 83**
**80335 München (DE)**

(54) **CHANNEL SIGNAL TRANSMISSION METHOD AND APPARATUS, TERMINAL, AND NETWORK SIDE DEVICE**

(57)     This application discloses a channel signal transmission method and apparatus, a terminal, and a network-side device, and pertains to the field of communications technologies. The channel signal transmission method in the embodiments of this application includes: transmitting, by a network-side device, a control signal and/or a control channel, where the control signal and/or control channel includes at least one of the following: a sequence part; and an information bit part; where the sequence part and/or the information bit part indicates at least one of the following: a behavior in a specific radio resource control RRC state; and the control signal and/or control channel includes specific control information.

A network-side device transmits a control signal and/or a control channel, where the control signal and/or control channel includes at least one of the following:
a sequence part; and
an information bit part; where
the sequence part and/or the information bit part indicates at least one of the following:
a behavior in a specific radio resource control RRC state; and
the control signal and/or control channel includes specific control information

101

FIG. 4

EP 4 561 188 A1

## Description

### CROSS-REFERENCE TO RELATED APPLICATIONS

This application claims priority to Chinese Patent Application No.202210845341.3, filed in China on July 18, 2022, which is incorporated herein by reference in its entirety.

### TECHNICAL FIELD

This application pertains to the field of communications technologies, and specifically, relates to a channel signal transmission method and apparatus, a terminal, and a network-side device.

### BACKGROUND

Low-power receivers usually do not have the ability to receive signals with exact frequency synchronization or exact time synchronization, so it is possible that the received control signals are signals for other users or signals for other purposes. For example, a terminal in a connected state may receive control signals for a terminal in an idle state, such as a paging signal indicating a terminal in an idle state. Users not in the connected state may also receive some control signals used by connected state users to control connected state behaviors. There is an urgent need for a mechanism that enables the terminal to correctly determine the purpose of the received control signals.

### SUMMARY

Embodiments of this application provide a channel signal transmission method and apparatus, a terminal, and a network-side device, capable of distinguishing the purposes of control signals and/or control channels.

According to a first aspect, a channel signal transmission method is provided, including:
transmitting, by a network-side device, a control signal and/or a control channel, where the control signal and/or control channel includes at least one of the following:

a sequence part; and
an information bit part; where
the sequence part and/or the information bit part indicates at least one of the following:

a behavior in a specific radio resource control RRC state; and
the control signal and/or control channel includes specific control information.

According to a second aspect, a channel signal transmission apparatus is provided, including:
a transmitting module, configured to transmit a control signal and/or a control channel, where the control signal and/or control channel includes at least one of the following:

a sequence part; and
an information bit part; where
the sequence part and/or the information bit part indicates at least one of the following:

a behavior in a specific radio resource control RRC state; and
the control signal and/or control channel includes specific control information.

According to a third aspect, a channel signal transmission method is provided, including:
receiving, by a terminal, a control signal and/or a control channel, where the control signal and/or control channel includes at least one of the following:

a sequence part; and
an information bit part; where
the sequence part and/or the information bit part indicates at least one of the following:

a behavior in a specific radio resource control RRC state; and
the control signal and/or control channel includes specific control information.

According to a fourth aspect, a channel signal transmission apparatus is provided, including:
a receiving module, configured to receive a control signal and/or a control channel, where the control signal and/or control channel includes at least one of the following:

a sequence part; and
an information bit part; where
the sequence part and/or the information bit part indicates at least one of the following:

a behavior in a specific radio resource control RRC state; and
the control signal and/or control channel includes specific control information.

According to a fifth aspect, a network-side device is provided. The network-side device includes a processor and a memory, where the memory stores a program or instruction executable on the processor. When the program or instruction is executed by the processor, the steps of the method according to the first aspect are implemented.

According to a sixth aspect, a network-side device is provided, including a processor and a communication interface, where the communication interface is configured to transmit a control signal and/or a control channel, and the control signal and/or control channel includes at least one of the following:

a sequence part; and
an information bit part; where
the sequence part and/or the information bit part indicates at least one of the following:

a behavior in a specific radio resource control RRC state; and
the control signal and/or control channel includes specific control information.

According to a seventh aspect, a terminal is provided. The terminal includes a processor and a memory, where the memory stores a program or instruction executable on the processor. When the program or instruction is executed by the processor, the steps of the method according to the third aspect are implemented.

According to an eighth aspect, a terminal is provided, including a processor and a communication interface, where the communication interface is configured to receive a control signal and/or a control channel, and the control signal and/or control channel includes at least one of the following:

a sequence part; and
an information bit part; where
the sequence part and/or the information bit part indicates at least one of the following:

a behavior in a specific radio resource control RRC state; and
the control signal and/or control channel includes specific control information.

According to a ninth aspect, a communication system is provided, including a network-side device and a terminal. The network-side device may be configured to execute the steps of the channel signal transmission method according to the first aspect, and the terminal may be configured to execute the steps of the channel signal transmission method according to the third aspect.

According to a tenth aspect, a readable storage medium is provided, where a program or instruction is stored in the readable storage medium, and when the program or instruction is executed by a processor, the steps of the method according to the first aspect are implemented, or the steps of the method according to the third aspect are implemented.

According to an eleventh aspect, a chip is provided. The chip includes a processor and a communication interface, the communication interface is coupled to the processor, and the processor is configured to run a program or instruction to implement the method according to the first aspect or the method according to the third aspect.

According to a twelfth aspect, a computer program/program product is provided. The computer program/program product is stored in a storage medium, and the computer program/program product is executed by at least one processor so as to implement the channel signal transmission method according to the first aspect or the steps of the channel signal transmission method according to the third aspect.

In this embodiment of this application, the network-side device transmits a control signal and/or a control channel, where the sequence part and/or the information bit part can indicate a behavior in a specific RRC state and/or the control signal and/or control channel contains specific control information. In this way, when the terminal receives the control signal and/or control channel in a case of using a low-power receiver, it can distinguish the purpose of the control signal and/or control channel, enabling the control signal and/or control channel to be applied in a low power (low power, LP) wake-up signal (wake-up signal, WUS) (that is, LP-WUS) scenario.

**BRIEF DESCRIPTION OF DRAWINGS**

FIG. 1 is a block diagram of a wireless communications system to which embodiments of this application are applicable;
FIG. 2 is a schematic diagram of a working principle of a NR LP WUR/WUS;
FIG. 3 is a schematic diagram of a wake-up signal;
FIG. 4 is a schematic flowchart of a channel signal transmission method on a network-side device side according to an embodiment of this application;
FIG. 5 is a schematic flowchart of a channel signal transmission method on a terminal side according to an embodiment of this application;
FIG. 6 is a schematic diagram of a channel format according to an embodiment of this application;
FIG. 7 is a schematic structural diagram of a communication device according to an embodiment of this application;
FIG. 8 is a schematic structural diagram of a terminal according to an embodiment of this application; and
FIG. 9 is a schematic structural diagram of a network-side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to long term evolution (Long Term Evolution, LTE) or LTE-Advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustrative purposes, and NR terms are used in most of the following descriptions, although these technologies may also be applied to other applications than the NR system application, for example, to the 6th generation (6th Generation, 6G) communication system.

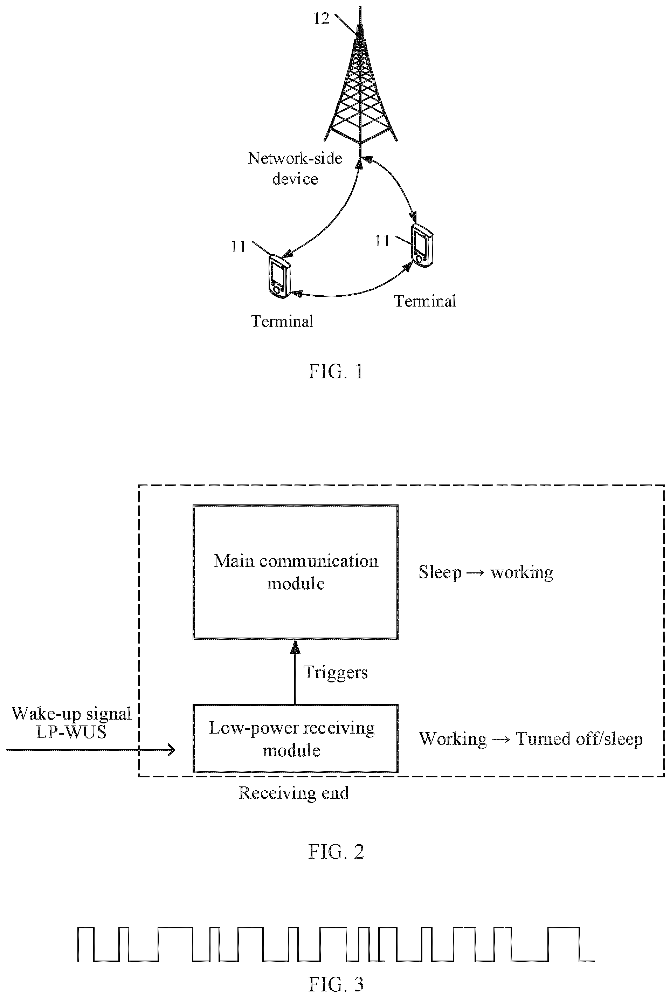

FIG. 1 is a block diagram of a wireless communications system to which embodiments of this application are applicable. The wireless communication system includes a terminal 11 and a network-side device 12. The terminal 11 may be a mobile phone, tablet personal computer (Tablet Personal Computer), laptop computer (Laptop Computer) or notebook computer, personal digital assistant (Personal Digital Assistant, PDA), palmtop computer, netbook, ultra-mobile personal computer (ultra-mobile personal computer, UMPC), mobile internet device (Mobile Internet Device, MID), augmented reality (augmented reality, AR)/virtual reality (virtual reality, VR) device, robot, wearable device (Wearable Device), vehicle user equipment (Vehicle User Equipment, VUE), pedestrian user equipment (Pedestrian User Equipment, PUE), smart home device (wireless communication-enabled home devices such as refrigerators, televisions, washing machines, or furniture), gaming console, personal computer (Personal Computer, PC), automated teller machine or self-service machine, or other terminal-side device. Wearable devices include smartwatches, smart bands, smart earphones, smart glasses, smart jewelry (smart bangles, smart bracelets, smart rings, smart necklaces, smart foot bangles, and smart anklets), smart wristbands, and smart clothing. It should be noted that the specific type of the terminal 11 is not limited in the embodiments of this application. The network-side device 12 can include an access network device or core network device, where the access network device 12 can also be referred to as a radio access network device, radio access network (Radio Access Network, RAN), radio access network function, or radio access network unit. The access network device 12 can include base stations, wireless local area network (Wireless Local Area Network, WLAN) access points, wireless fidelity (Wireless Fidelity, Wi-Fi) nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited.

In related arts, research work on low power (low power, LP) wake-up receivers (Wake-up Receiver, WUR)/wake-up signals (wake-up signal, WUS) has been introduced into mobile cellular systems. The basic working principle of a LP WUR is that the receiving end includes a first module and a second module. As shown in FIG. 2, the first module is a main communication module for transmitting and receiving mobile communication data, and the second module is a low power receiving module for receiving the above wake-up signal. In a power-saving state, the terminal turns on the low power receiving module to monitor for an LP-WUS and turns off the main communication module. When downlink data arrives, the network transmits a wake-up signal to the terminal. The terminal, upon detecting the wake-up signal through the low power receiving module, triggers the main communication module to switch from off to on after a series of judgments (while in this case the low power receiving module switches from a working state to the off state). The low power receiving module may be continuously turned on or intermittently turned on, and can receive a low-power wake-up signal when turned on. The wake-up signal may be considered as a control channel or signal that supports the terminal to receive using a low-power receiver.

To reduce reception activities of the terminal in a standby state, thereby truly turning off the radio frequency (Radio Frequency, RF) and baseband (Baseband) modem (MODEM) modules and significantly reducing the power consumption for communication reception, a near "zero" power receiver can be introduced into the receiving module of the terminal to achieve this. This near "zero" power receiver does not require complex signal detection (such as amplification, filtering, and quantization) by the RF module and signal processing by the MODEM. It only performs passive matched filtering and low-power signal processing.

On the base station side, through the triggering of the wake-up signal on-demand (on-demand), the near "zero" power receiver can be activated to receive activation notifications, thereby triggering a series of processes inside the terminal, for example, turning on modules such as the RF transceiver and baseband processing modules.

This wake-up signal is usually some relatively simple on-off keying (on-off keying) signals, as shown in FIG. 3. In this way, the receiver can detect the wake-up signal through a simple energy detection process and possibly subsequent sequence detection and identification processes, and the like.

The possible channel/signal formats for an LP-WUS are as follows:

WUS format 1:

| Preamble (Preamble) | Data (Data) |
| --- | --- |

WUS format 2:

| Preamble | Control (Control) | Data |
| --- | --- | --- |

Data in format 1 and/or 2 can be directly used to transmit data or control information.

Control in format 2 refers to using different sequences to indicate different control information.

The application of an LP-WUS in a radio resource control (Radio Resource Control, RRC) connected state is similar in principle and effect to the application of an LP-WUS in an RRC idle (idle) state.

In the RRC connected state, the terminal can be configured to first monitor for an LP-WUS (the LP-WUS monitoring power consumption is much lower compared to the physical downlink control channel (Physical downlink control channel, PDCCH) monitoring power consumption. For example, the LP-WUS monitoring power consumption is 0.005unit/ms, while the PDCCH monitoring power consumption is 100unit/ms). After detecting an LP-WUS, the terminal then enters PDCCH monitoring, thereby replacing unnecessary PDCCH monitoring with LP-WUS monitoring and achieving power savings.

Additionally, in another application scenario, LP-WUS monitoring can be deployed during a duration of skipping PDCCH monitoring. The terminal does not monitor PDCCH during this period, thereby causing a certain transmission delay. However, with LP-WUS monitoring, the terminal can be woken up at any time during this period. The delay from detecting an LP-WUS to entering PDCCH monitoring mainly depends on what sleep state (deep light micro sleep) the main receiver has entered. Therefore, the effect of reducing delay can be achieved.

An LP-WUS has a low power consumption feature, which significantly reduces the power consumption level of reception at the terminal. In addition, due to the low power consumption feature, the terminal can perform WUS reception very frequently, thereby reducing transmission delay without significant power consumption. In different RRC states, the terminal may receive an LP-WUS or a similarly designed signal/channel to optimize power consumption or delay for different transmission processes. What should be considered is that the terminal can identify the RRC state corresponding to the transmission and reception behavior indicated by the received control signal or control channel, or distinguish the purpose of the control command.

The following describes in detail a channel signal transmission method provided in an embodiment of this application through some embodiments and their application scenarios, with reference to the accompanying drawings.

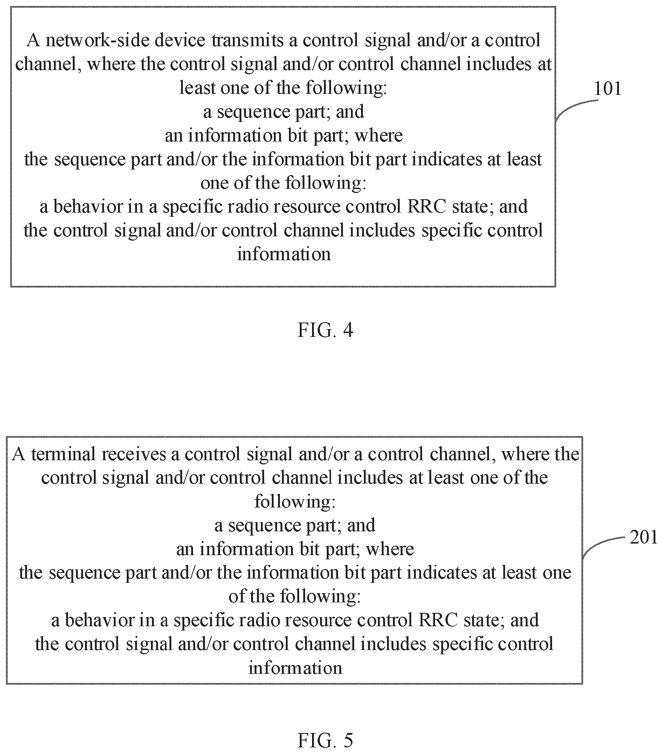

An embodiment of this application provides a channel signal transmission method, as shown in FIG. 4, including:

Step 101: A network-side device transmits a control signal and/or a control channel, where the control signal and/or control channel includes at least one of the following:

a sequence part; and
an information bit part; where
the sequence part and/or the information bit part indicates at least one of the following:

a behavior in a specific radio resource control RRC state; and
the control signal and/or control channel includes specific control information.

In this embodiment of this application, the network-side device transmits a control signal and/or a control channel, where the sequence part and/or the information bit part can indicate a behavior in a specific RRC state and/or the control signal and/or control channel contains specific control information. In this way, when the terminal receives the control signal and/or control channel in a case of using a low-power receiver, it can distinguish the purpose of the control signal and/or control channel, enabling the control signal and/or control channel to be applied in an LP-WUS scenario.

For a signal that can be received using a low-power receiver, possible control signal and/or control channel structures include: sequence, information bit (bit), or a combination of both. The sequence part can be used for synchronization or for information indication; an information sequence for synchronization is typically referred to as a preamble. Typically, a preamble has limited formats or number of sequences, and does not carry indicative information, or can indicate limited information.

In some embodiments, the sequence part includes at least one of the following:

a synchronization sequence, for example, a random access preamble (preamble) sequence; and an indication information sequence.

The sequence part may include only a synchronization sequence, or only an indication information sequence, or include both the synchronization sequence and the indication information sequence.

When the sequence part includes both the synchronization sequence and the indication information sequence, the transmission time of the indication information sequence is after the transmission time of the synchronization sequence.

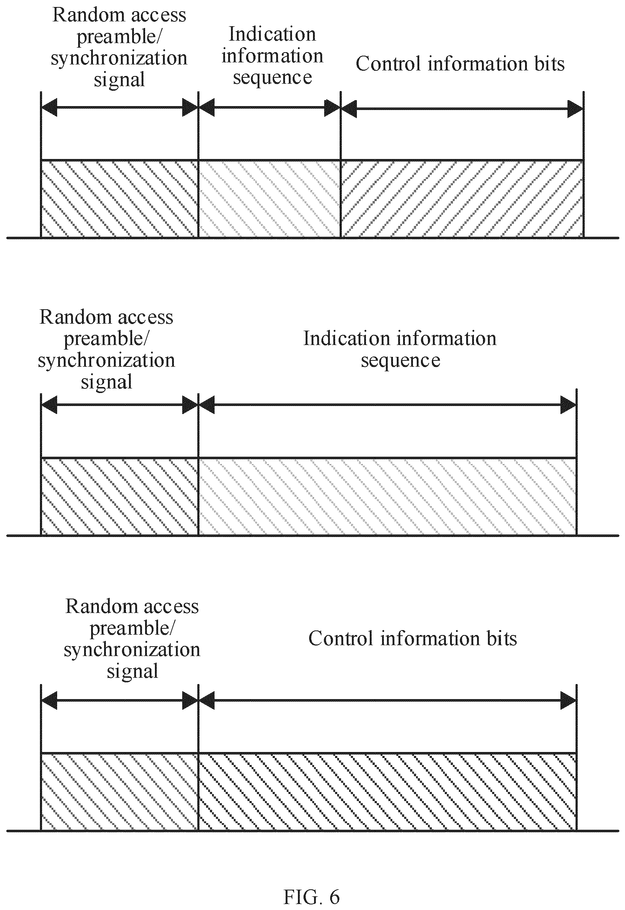

To further carry indicative information, an indication information sequence can be further transmitted after the preamble, which can be either an unencoded or an encoded indication information sequence. In some embodiments, a channel format structure suitable for a low-power receiver is shown in FIG. 6.

In some embodiments, the information bit part includes at least one of the following:

control information bits; and cyclic redundancy check (Cyclic redundancy check, CRC) bits of the control information bits.

In some embodiments, a purpose of the control signal and/or control channel is indicated by at least one of the following:

length of the synchronization sequence; length of the indication information sequence; length of the control information bits in the information bit part; specific bits in the control information bits; and CRC bits in the information bit part.

In this way, after the terminal receives the synchronization sequence and/or indication information sequence, it can determine the purpose of the control signal and/or control channel.

The network-side device can transmit indication information for different terminals or different purposes in a same control signal or control channel. For example, bits x...y in the control information bits indicate that UE#1 is being paged, and bits p...q in the control information bits indicate a system information update; or bits x...y in the control information bits indicate that an idle or sleep (sleep) state UE (or group) is being paged, and bits p...q in the control information indicate that RRC connected (Connected) state UE#2 is to perform PDCCH skipping (skipping). In this case, different terminals monitor different bit positions. In other words, the terminal distinguishes the types and purposes of the control signals or control channels through different specific bit positions. The length and/or starting position of these specific bits are defined by a protocol or configured by a network-side device.

In some embodiments, a purpose of the control signal and/or control channel is indicated by the CRC bits, including at least one of the following:

a specific radio network temporary identifier (Radio Network Temporary Identifier, RNTI), so that after a specific RNTI is received, the purpose of the control signal and/or control channel can be determined; a specific scrambling sequence, for example, (0,0,...0) and (0,0,...1), which can respectively indicate different signal purposes; and a specific CRC generation polynomial, so that after a specific CRC generation polynomial is received, the purpose of the control signal and/or control channel can be determined.

In some embodiments, the purpose of a control signal and/or control channel can be indicated by a preamble sequence, and the terminal executes the instruction information in the control signal and/or control channel only when a specific preamble is detected. Alternatively, the indication information can be indicated by an indication information sequence. The transmitting end indicates different information through different indication information sequences and the receiving end determines the indicated content according to different indication information sequences. The terminal needs to perform blind detection among multiple sequences to determine the content indicated by the control command. The indication information sequence can be preceded by a preamble sequence. The preamble sequence is used for synchronization. After synchronization is completed, the terminal determines the content of the indication information based on the indication information sequence. In this case, compared to indicating the content of the indication information through a preamble sequence, more different purposes can be indicated.

When different preamble sequences or indication information sequences are used to indicate the purposes of the control signals and/or control channels, different sequences of a same length, different lengths of a same sequence, or different sequences of different lengths can be used to indicate different purposes.

If the preamble sequence or indication information sequence part is used to indicate the information type or purpose, when the terminal detects the sequence and finds out that the sequence is not the target sequence of the terminal, it can abandon further detection of the subsequent data part, thereby saving the power consumption of the terminal.

In some embodiments, the purpose of the control signal and/or control channel can be indicated by information bits after the preamble sequence or indication information sequence. The method of indicating by information bits has greater flexibility or scalability. The following methods can be used to distinguish control signals and/or control channels for different purposes: Different sequence lengths are used to correspond to different purposes of the control signals and/or control channels (collectively referred to as control commands). For example, when the sequence length is L1, it is for purpose 1; and when the sequence length is L2, it is for purpose 2.

Alternatively, a specific field in the control information bits is used for indication. For example, specific X bits in the control information bits are used for indication.

Alternatively, CRC bits in the information bit part are used for indication. For example, RNTI is used for scrambling. For an LP-WUS indicating a connected state terminal, a cell RNTI (Cell RNTI, C-RNTI) is used for scrambling; and for an idle state or sleep state terminal, a paging RNTI (Paging RNTI, P-RNTI) or another RNTI is used for scrambling. Alternatively, a predefined scrambling sequence is used to scramble CRC. For example, <0,0,...0>, and <0,0,...,1> are used to indicate and distinguish different purposes of control signals and/or control channels. Alternatively, different CRC generation polynomials are used for distinction. For example, the CRC generation polynomial for a control command of purpose 1 is $x^{15}+x^{11}+x^{10}+x^{7}+x^{4}+x^{2}+x+1$; and the CRC generation polynomial for a control command of purpose 2 is

$$x^{15}+x^{13}+x^{9}+x^{8}+x^{6}+x^{3}+x+1.$$

The above methods can be combined. When there are many control signals and/or control channels for different purposes, the purposes of the control signals and/or control channels can be jointly indicated by preamble sequences, indication information sequences, or control information bits.

In some embodiments, the control signal and/or control channel satisfies at least one of the following:

modulated by binary on-off keying (On-Off Keying, OOK) or M amplitude shift keying (M Amplitude Shift Keying, M-ASK); and
encoded by Manchester Manchester, Biphase space coding FM0, Miller Miller, Walsh Walsh, or pulse interval encoding (Pulse Interval Encoding, PIE) encoding scheme.

To enable the terminal to receive signals using a low-power receiver, a control signal and/or control channel usually has the following characteristics: for example, the control signal is modulated using OOK or ASK, or simple encoding schemes such as Manchester, PIE, FM0, Miller, Walsh, and the like are further used to form a combination of signal amplitudes. In other words, amplitude information or a combination of amplitude information is used to transmit information, such that the terminal only needs to judge through the amplitude information or a combination of amplitude information to demodulate the control information.

In some embodiments, the RRC state includes at least one of the following:

RRC connected state (connected);
RRC idle state (idle); and
sleep state (sleep).

Preferably, in the sleep state, the terminal turns off the main receiver or uses an ultra-low-power receiver to receive control signals; alternatively, in the sleep state, the terminal only receives control signals of a specific format, thereby reducing the power consumption of the terminal.

In some embodiments, the specific control information includes at least one of the following:

indication of whether to monitor for a paging signal;
tracking reference signal TRS availability indication;
indication of whether to monitor for a paging early indication;
indication of a paging group information update, including an update of a subgroup (subgroup) ID and an update of a paging cycle (paging cycle) of the UE;
indication of whether a paging is a core network paging or an access network paging;
indication of a tracking area update;
indication of a system information update;
indication of switching of a monitoring parameter of a physical downlink control channel PDCCH;
indication of switching of a discontinuous reception (Discontinuous Reception, DRX) parameter;
a reference signal;
higher layer configuration of the channel;
indication of monitoring of specific signaling; and
indication of a source of the control signal and/or control channel.

In some embodiments, the monitoring parameter of the PDCCH includes at least one of the following:

whether to monitor the PDCCH;
a monitoring cycle of the PDCCH;

a search space for monitoring; and
a search space group for monitoring.

In some embodiments, the DRX parameter includes at least one of the following:

whether to enable an associated DRX on-duration (onduration) timer (timer);
updating a starting position of a DRX onduration;
updating a DRX cycle;
updating length of a DRX onduration; and
length of a DRX (inactivity) inactivity timer.

Control signals and/or control channels can be used to indicate different information for terminals in different RRC states. For example, the control signals and/or control channels are used to indicate which RRC state the function pertains to, such as indicating control information for a UE in the RRC connected state, or indicating control information in the RRC idle state, or indicating control information in the RRC sleep state. The RRC sleep state is an RRC state that can be transitioned to from the RRC idle state, where a typical terminal behavior is to receive only specific signals and/or channels, such as channels specially designed for a low-power receiver, and channels with certain characteristic modulation (OOK, or ASK) and encoding (Manchester, FM0, ...) methods. Alternatively, an RRC sleep state is not defined, and such channels are monitored in the RRC idle state. Different terminal behaviors in the idle state are triggered based on the reception of such channels.

Additionally, the control signal and/or control channel can also indicate different terminal behaviors, such as indicating the monitoring of paging information by the terminal in the idle state, indicating that the system information is updated, indicating whether to monitor the PDCCH during a DRX cycle in the connected state, indicating whether to skip monitoring of the PDCCH, indicating whether a PDCCH monitoring search space changes, and the like.

In addition, the control signal and/or control channel suitable for a low-power receiver can be used to indicate the purpose of waking up a UE in an idle state or sleep state, such as whether it is being paged, whether the system information is updated, whether to monitor for the paging early indication information, whether the paging group information is updated, and whether the paging is core network (Core Network, CN) paging or RAN paging. This helps the terminal in the idle state or sleep state to better determine subsequent reception behaviors, the time to turn on the main receiver, and the like, optimizing overall power consumption and/or delay.

In addition, control signals and/or control channels suitable for low-power receivers between different devices can be transmitted by different cells, TRPs, UEs, relay (relay) nodes, and the like. The control signal and/or control channel can further indicate the source of a signal, including which type of device the signal comes from, for example, whether it is from a macro cell, TRP, UE, relay, and the like; or a specific device identifier, such as cell ID, UE ID, TRP ID, Relay ID, and the like.

In some embodiments, the source of the control signal and/or control channel includes at least one of the following:

a cell (Cell) identifier;
a transmitting receiving point TRP identifier;
a terminal identifier; and
a relay node identifier.

An embodiment of this application further provides a channel signal transmission method, as shown in FIG. 5, including:
Step 201: A terminal receives a control signal and/or a control channel, where the control signal and/or control channel includes at least one of the following:

a sequence part; and
an information bit part; where
the sequence part and/or the information bit part indicates at least one of the following:

a behavior in a specific radio resource control RRC state; and
the control signal and/or control channel includes specific control information.

In some embodiments, the method further includes:

monitoring for, by the terminal, the control signal and/or control channel;
in a case that a target object is detected, parsing, by the terminal, the target object, or transmitting, by the terminal, the target object to a main receiver for parsing; and in a case that the target object is not detected, discarding or ignoring the control signal and/or control channel; where
the target object includes at least one of the following:

a specific sequence;
specific information bits; and
specific cyclic redundancy check CRC.

In network deployment, different nodes may send control channels and/or control signals for different functions. For a specific terminal, only one or a limited number of functions need to use such control channels and/or control signals for transmission; or the network-side device is configured as only one or a limited number of functions use such control channels and/or control signals for transmission. For example, for a specific function (for example, indicating parameters related to PDCCH monitoring), the network-side device has configured a specific sequence (which may be a preamble sequence or an indication information sequence), specific information bit(s), or specific CRC in the control signal and/or control channel. If the terminal detects a specific sequence, specific information bit(s), or specific CRC, it considers the control channel and/or control signal as targeted for the terminal and can further parse the bit(s) information transmitted in the control channel and/or control signal.

For example, for a control channel, the sequence part of the channel contains two candidate sequences. Sequence 0 indicates that the sequence is used to indicate that the channel is for indicating paging of a terminal in an idle/sleep state, and sequence 1 indicates that the channel is for indicating functions or behaviors of an RRC connected state terminal. The terminal, based on its current state, in a case of detecting a matched sequence, parses the subsequent information bits. These information bits may further specifically indicate the parameters of behaviors or functions of terminals in RRC idle/sleep or RRC connected state.

For example, the first two bits in the information bits are the header, where a header of '0,0' represents indicating PDCCH skipping, and a header of '0,1' represents indicating paging a terminal. If a connected state terminal is configured with only the PDCCH skipping function and does not need to monitor for paging, the terminal parses the subsequent field only when the header bits are '0,0'. The field may contain specific parameters for PDCCH skipping, such as the skipping time period. Similarly, an idle/sleep state terminal configured with paging parses the subsequent field only when the header is '0,1'.

Considering the limited power consumption of the terminal when performing low-power reception, this parsing behavior can be performed in the main receiver. In other words, the terminal turns on the main receiver for parsing only when the terminal detects a matched sequence, information bits, and CRC, thus further reducing the power consumption of the terminal. When the terminal detects that the signal does not match, it discards or ignores the signal or channel.

In some embodiments, the target object is defined by a protocol or configured by a network-side device.

In some embodiments, the sequence part includes at least one of the following:

a synchronization sequence, for example, a random access preamble (preamble) sequence; and
an indication information sequence.

The sequence part may include only a synchronization sequence, or only an indication information sequence, or include both the synchronization sequence and the indication information sequence.

When the sequence part includes both the synchronization sequence and the indication information sequence, the transmission time of the indication information sequence is after the transmission time of the synchronization sequence.

In some embodiments, the information bit part includes at least one of the following:

control information bits; and
cyclic redundancy check CRC bits of the control information bits.

In some embodiments, a purpose of the control signal and/or control channel is indicated by at least one of the following:

length of the synchronization sequence;
length of the indication information sequence;
length of the control information bits in the information bit part;
specific bits in the control information bits; and
CRC bits in the information bit part.

In this way, after the terminal receives the synchronization sequence and/or indication information sequence, it can determine the purpose of the control signal and/or control channel.

In some embodiments, length and/or starting position of the specific bits is defined by a protocol or configured by a network-side device.

In some embodiments, a purpose of the control signal and/or control channel is indicated by the CRC bits, including at least one of the following:

a specific radio network temporary identifier RNTI, so that after a specific RNTI is received, the purpose of the control signal and/or control channel can be determined;
a specific scrambling sequence, for example, (0,0,...0) and (0,0,...1), which can respectively indicate different signal purposes; and
a specific CRC generation polynomial, so that after the CRC bits are received, the purpose of the control signal and/or control channel can be determined.

In some embodiments, the control signal and/or control channel satisfies at least one of the following:

modulated by binary on-off keying OOK or M amplitude shift keying M-ASK; and
encoded by Manchester Manchester, Biphase space coding FM0, Miller Miller, Walsh Walsh, or pulse interval encoding PIE encoding scheme.

In some embodiments, the RRC state includes at least one of the following:

RRC connected state;
RRC idle state; and
sleep state.

Preferably, in the sleep state, the terminal turns off the main receiver or uses an ultra-low-power receiver to receive control signals; alternatively, in the sleep state, the terminal only receives control signals of a specific format, thereby reducing the power consumption of the terminal.

In some embodiments, the specific control information includes at least one of the following:

> indication of whether to monitor for a paging signal;
> tracking reference signal (Tracking Reference Signal, TRS) availability indication;
> indication of whether to monitor for a paging early indication;
> indication of a paging group information update;
> indication of whether a paging is a core network paging or an access network paging;
> indication of a tracking area update;
> indication of a system information update;
> indication of switching of a monitoring parameter of a physical downlink control channel PDCCH;
> indication of switching of a discontinuous reception DRX parameter;
> a reference signal;
> higher layer configuration of the channel;
> indication of monitoring of specific signaling; and
> indication of a source of the control signal and/or control channel.

In some embodiments, the source of the control signal and/or control channel includes at least one of the following:

> a cell Cell identifier;
> a transmitting receiving point TRP identifier;
> a terminal identifier; and
> a relay node identifier.

In some embodiments, the monitoring parameter of the PDCCH includes at least one of the following:

> whether to monitor the PDCCH;
> a monitoring cycle of the PDCCH;
> a search space for monitoring; and
> a search space group for monitoring.

In some embodiments, the DRX parameter includes at least one of the following:

> whether to enable an associated DRX on-duration (onduration) timer (timer);
> updating a starting position of a DRX onduration;
> updating a DRX cycle;
> updating length of a DRX onduration; and
> length of a DRX (inactivity) inactivity timer.

The channel signal transmission method provided in the embodiments of this application can be performed by a channel signal transmission apparatus. In this embodiment of this application, the channel signal transmission apparatus provided in the embodiments of this application is described by using the channel signal transmission method being executed by the channel signal transmission apparatus as an example.

An embodiment of this application provides a channel signal transmission apparatus, applied to a network-side device and including:

a transmitting module, configured to transmit a control signal and/or a control channel, where the control signal and/or control channel includes at least one of the following:

> a sequence part; and
> an information bit part; where
> the sequence part and/or the information bit part indicates at least one of the following:
>
>> a behavior in a specific radio resource control RRC state; and
>> the control signal and/or control channel includes specific control information.

In some embodiments, the sequence part includes at least one of the following:

> a synchronization sequence; and
> an indication information sequence.

In some embodiments, the sequence part includes the synchronization sequence and the indication information sequence.

In some embodiments, a transmission time of the indication information sequence is after a transmission time of the synchronization sequence.

In some embodiments, the information bit part includes at least one of the following:

> control information bits; and
> cyclic redundancy check CRC bits of the control information bits.

In some embodiments, a purpose of the control signal and/or control channel is indicated by at least one of the following:

> length of the synchronization sequence;
> length of the indication information sequence;
> length of the control information bits in the information bit part;
> specific bits in the control information bits; and
> CRC bits in the information bit part.

In some embodiments, length and/or starting position of the specific bits is defined by a protocol or configured by a network-side device.

In some embodiments, a purpose of the control signal and/or control channel is indicated by the CRC bits, including at least one of the following:

a specific radio network temporary identifier RNTI;
a specific scrambling sequence; and
a specific CRC generation polynomial.

In some embodiments, the control signal and/or control channel satisfies at least one of the following:

modulated by binary on-off keying OOK or M amplitude shift keying M-ASK; and
encoded by Manchester Manchester, Biphase space coding FM0, Miller Miller, Walsh Walsh, or pulse interval encoding PIE encoding scheme.

In some embodiments, the RRC state includes at least one of the following:

RRC connected state;
RRC idle state; and
sleep state.

In some embodiments, the specific control information includes at least one of the following:

indication of whether to monitor for a paging signal;
tracking reference signal TRS availability indication;
indication of whether to monitor for a paging early indication;
indication of a paging group information update;
indication of whether a paging is a core network paging or an access network paging;
indication of a tracking area update;
indication of a system information update;
indication of switching of a monitoring parameter of a physical downlink control channel PDCCH;
indication of switching of a discontinuous reception DRX parameter;
a reference signal;
higher layer configuration of the channel;
indication of monitoring of specific signaling; and
indication of a source of the control signal and/or control channel.

In some embodiments, the source of the control signal and/or control channel includes at least one of the following:

a cell (Cell) identifier;
a transmitting receiving point TRP identifier;
a terminal identifier; and
a relay node identifier.

In some embodiments, the monitoring parameter of the PDCCH includes at least one of the following:

whether to monitor the PDCCH;
a monitoring cycle of the PDCCH;
a search space for monitoring; and
a search space group for monitoring.

In some embodiments, the DRX parameter includes at least one of the following:

whether to enable an associated DRX on-duration (onduration) timer (timer);
updating a starting position of a DRX onduration;
updating a DRX cycle;
updating length of a DRX onduration; and
length of a DRX (inactivity) inactivity timer.

An embodiment of this application provides a channel signal transmission apparatus, applied to a terminal and including:
a receiving module, configured to receive a control signal and/or a control channel, where the control signal and/or control channel includes at least one of the following:

a sequence part; and
an information bit part; where
the sequence part and/or the information bit part indicates at least one of the following:

a behavior in a specific radio resource control RRC state; and
the control signal and/or control channel includes specific control information.

In some embodiments, the apparatus further includes:

a detection module, configured to monitor for the control signal and/or control channel;
in a case that a target object is detected, the module parses the target object, or transmits the target object to a main receiver for parsing; and in a case that the target object is not detected, the module discards or ignores the control signal and/or control channel; where
the target object includes at least one of the following:

a specific sequence;
specific information bits; and
specific cyclic redundancy check CRC.

In some embodiments, the target object is defined by a protocol or configured by a network-side device.
In some embodiments, the sequence part includes at least one of the following:

a synchronization sequence; and
an indication information sequence.

In some embodiments, the sequence part includes the synchronization sequence and the indication information sequence.

In some embodiments, a transmission time of the indication information sequence is after a transmission time of the synchronization sequence.

In some embodiments, the information bit part includes at least one of the following:

control information bits; and
cyclic redundancy check CRC bits of the control information bits.

In some embodiments, a purpose of the control signal and/or control channel is indicated by at least one of the following:

length of the synchronization sequence;
length of the indication information sequence;
length of the control information bits in the information bit part;
specific bits in the control information bits; and
CRC bits in the information bit part.

In some embodiments, length and/or starting position of the specific bits is defined by a protocol or configured by a network-side device.

In some embodiments, a purpose of the control signal and/or control channel is indicated by the CRC bits, including at least one of the following:

a specific radio network temporary identifier RNTI;
a specific scrambling sequence; and
a specific CRC generation polynomial.

In some embodiments, the control signal and/or control channel satisfies at least one of the following:

modulated by binary on-off keying OOK or M amplitude shift keying M-ASK; and
encoded by Manchester Manchester, Biphase space coding FM0, Miller Miller, Walsh Walsh, or pulse interval encoding PIE encoding scheme.

In some embodiments, the RRC state includes at least one of the following:

RRC connected state;
RRC idle state; and
sleep state.

In some embodiments, the specific control information includes at least one of the following:

indication of whether to monitor for a paging signal;
tracking reference signal TRS availability indication;
indication of whether to monitor for a paging early indication;

indication of a paging group information update;
indication of whether a paging is a core network paging or an access network paging;
indication of a tracking area update;
indication of a system information update;
indication of switching of a monitoring parameter of a physical downlink control channel PDCCH;
indication of switching of a discontinuous reception DRX parameter;
a reference signal;
higher layer configuration of the channel;
indication of monitoring of specific signaling; and
indication of a source of the control signal and/or control channel.

In some embodiments, the source of the control signal and/or control channel includes at least one of the following:

a cell (Cell) identifier;
a transmitting receiving point TRP identifier;
a terminal identifier; and
a relay node identifier.

In some embodiments, the monitoring parameter of the PDCCH includes at least one of the following:

whether to monitor the PDCCH;
a monitoring cycle of the PDCCH;
a search space for monitoring; and
a search space group for monitoring.

In some embodiments, the DRX parameter includes at least one of the following:

whether to enable an associated DRX on-duration (onduration) timer (timer);
updating a starting position of a DRX onduration;
updating a DRX cycle;
updating length of a DRX onduration; and
length of a DRX (inactivity) inactivity timer.

The channel signal transmission apparatus in the embodiments of this application may be an electronic device, for example an electronic device having an operating system, or may be a component of an electronic device, for example, an integrated circuit or a chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The channel signal transmission apparatus provided in this embodiment of this application can implement processes implemented in the method embodiments of FIG. 4 to FIG. 5, and achieve a same technical effect. To avoid repetition, details are not described herein again.

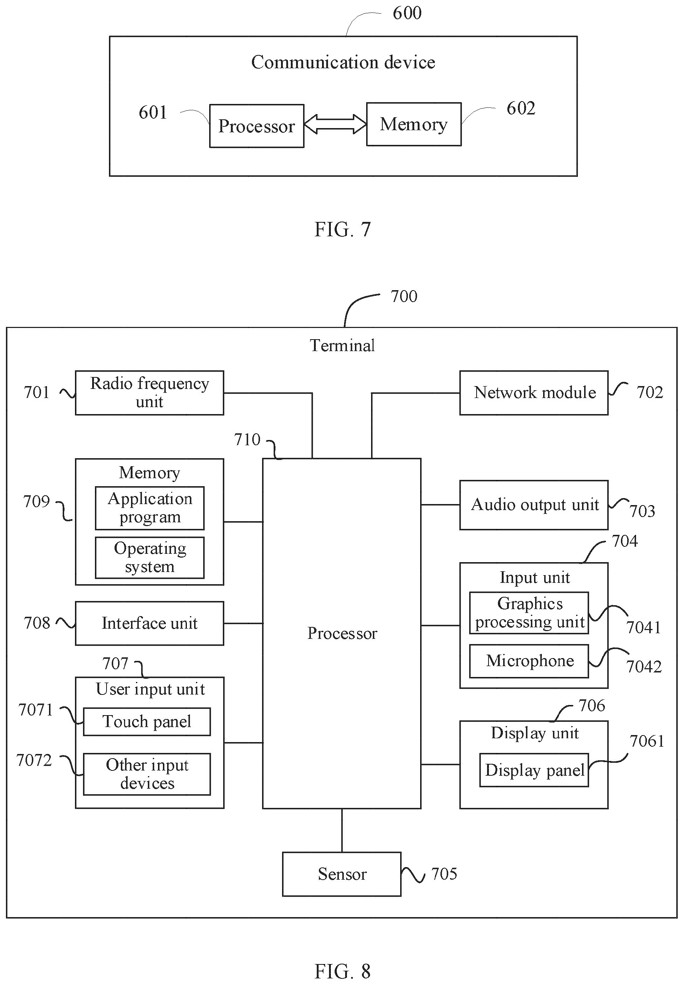

Optionally, as shown in FIG. 7, an embodiment of this application further provides a communication device 600 including a processor 601 and a memory 602. The memory 602 stores a program or instruction executable on the processor 601. For example, when the communication device 600 is a network-side device, when the program or instruction is executed by the processor 601, the steps of the foregoing embodiment of the channel signal transmission method are implemented, with the same technical effects achieved. When the communication device 600 is a terminal and when the program or the instruction is executed by the processor 601, the steps of the foregoing embodiment of the channel signal transmission method are implemented, with the same technical effects achieved. To avoid repetition, details are not described herein again.

An embodiment of this application further provides a network-side device, where the network-side device includes a processor and a memory, where the memory stores a program or an instruction capable of running on the processor, and when the program or instruction is executed by the processor, the steps of the channel signal transmission method are implemented.

An embodiment of this application further provides a network-side device including a processor and a communication interface, where the communication interface is configured to transmit a control signal and/or a control channel, and the control signal and/or control channel includes at least one of the following:

a sequence part; and
an information bit part; where
the sequence part and/or the information bit part indicates at least one of the following:

a behavior in a specific radio resource control RRC state; and
the control signal and/or control channel includes specific control information.

An embodiment of this application further provides a terminal, where the terminal includes a processor and a memory, where the memory stores a program or an instruction capable of running on the processor, and when the program or instruction is executed by the processor, the steps of the channel signal transmission method are implemented.

An embodiment of this application further provides a terminal, including a processor and a communication interface, where the communication interface is configured to receive a control signal and/or a control channel, and the control signal and/or control channel includes at least one of the following:

a sequence part; and
an information bit part; where
the sequence part and/or the information bit part indicates at least one of the following:

a behavior in a specific radio resource control RRC state; and
the control signal and/or control channel includes specific control information.

An embodiment of this application further provides a terminal including a processor and a communication interface. This terminal embodiment corresponds to the foregoing method embodiment on the terminal side. All processes and implementations in the foregoing method embodiment are applicable to this terminal embodiment, with the same technical effect achieved. Specifically, FIG. 8 is a schematic diagram of a hardware structure of a terminal implementing the embodiments of this application.

The terminal 700 includes but is not limited to at least part of these components: a radio frequency unit 701, a network module 702, an audio output unit 703, an input unit 704, a sensor 705, a display unit 706, a user input unit 707, an interface unit 708, a memory 709, a processor 710, and the like.

It can be understood by those skilled in the art that the terminal 700 may further include a power supply (for example, battery) supplying power to the components. The power supply may be logically connected to the processor 710 via a power management system, so that functions such as charge management, discharge management, and power consumption management are implemented via the power management system. The structure of the terminal shown in FIG. 8 does not constitute any limitation on the terminal, and the terminal may include more or fewer components than shown in the figure, or combine some of the components, or have different arrangements of the components. Details are not described herein.

It should be understood that in an embodiment of this application, the input unit 704 may include a graphics processing unit (Graphics Processing Unit, GPU) 7041 and a microphone 7042. The graphics processing unit 7041 processes image data of a static picture or video obtained by an image capture apparatus (such as a camera) in an image capture or video capture mode. The display unit 706 may include a display panel 7061. The display panel 7061 may be configured in a form of a liquid crystal display, an organic light-emitting diode display, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (for example, volume control button or on/off button), a trackball, a mouse, and a joystick. Details are not described herein.

In an embodiment of this application, the radio frequency unit 701 receives downlink data from a network-side device and transfers the data to the processor 710 for processing; and the radio frequency unit 701 can additionally send uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing programs or instructions and a second storage area for storing data. The first storage area may store an operating system, an application program or instruction required by at least one function (for example, a sound play function or an image play function), and the like. Additionally, the memory 709 may be a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in the embodiments of this application includes but is not be limited to these or any other applicable types of memories.

The processor 710 may include one or more processing units. Optionally, the processor 710 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 710.

In some embodiments, the processor 710 is configured to receive a control signal and/or a control channel, where the control signal and/or control channel includes at least one of the following:

a sequence part; and

an information bit part; where
the sequence part and/or the information bit part indicates at least one of the following:

a behavior in a specific radio resource control RRC state; and
the control signal and/or control channel includes specific control information.

In some embodiments, the processor 710 is configured to monitor for the control signal and/or control channel; in a case that a target object is detected, the processor 710 parses the target object, or transmits the target object to a main receiver for parsing; and in a case that the target object is not detected, the processor 710 discards or ignores the control signal and/or control channel; where
the target object includes at least one of the following:

a specific sequence;
specific information bits; and
specific cyclic redundancy check CRC.

In some embodiments, the target object is defined by a protocol or configured by a network-side device.

In some embodiments, the sequence part includes at least one of the following:

a synchronization sequence; and
an indication information sequence.

In some embodiments, the sequence part includes the synchronization sequence and the indication information sequence.

In some embodiments, a transmission time of the indication information sequence is after a transmission time of the synchronization sequence.

In some embodiments, the information bit part includes at least one of the following:

control information bits; and
cyclic redundancy check CRC bits of the control information bits.

In some embodiments, a purpose of the control signal and/or control channel is indicated by at least one of the following:

length of the synchronization sequence;
length of the indication information sequence;
length of the control information bits in the information bit part;
specific bits in the control information bits; and
CRC bits in the information bit part.

In some embodiments, length and/or starting position of the specific bits is defined by a protocol or configured by a network-side device.

In some embodiments, a purpose of the control signal and/or control channel is indicated by the CRC bits, including at least one of the following:

a specific radio network temporary identifier RNTI;
a specific scrambling sequence; and
a specific CRC generation polynomial.

In some embodiments, the control signal and/or control channel satisfies at least one of the following:

modulated by binary on-off keying OOK or M amplitude shift keying M-ASK; and
encoded by Manchester Manchester, Biphase space coding FM0, Miller Miller, Walsh Walsh, or pulse interval encoding PIE encoding scheme.

In some embodiments, the RRC state includes at least one of the following:

RRC connected state;
RRC idle state; and
sleep state.

In some embodiments, the specific control information includes at least one of the following:

indication of whether to monitor for a paging signal;
tracking reference signal TRS availability indication;
indication of whether to monitor for a paging early indication;
indication of a paging group information update;
indication of whether a paging is a core network paging or an access network paging;
indication of a tracking area update;
indication of a system information update;
indication of switching of a monitoring parameter of a physical downlink control channel PDCCH;
indication of switching of a discontinuous reception DRX parameter;
a reference signal;
higher layer configuration of the channel;
indication of monitoring of specific signaling; and
indication of a source of the control signal and/or control channel.

In some embodiments, the source of the control signal and/or control channel includes at least one of the following:

a cell (Cell) identifier;
a transmitting receiving point TRP identifier;
a terminal identifier; and
a relay node identifier.

In some embodiments, the monitoring parameter of the PDCCH includes at least one of the following:

whether to monitor the PDCCH;
a monitoring cycle of the PDCCH;
a search space for monitoring; and
a search space group for monitoring.

In some embodiments, the DRX parameter includes at least one of the following:

whether to enable an associated DRX on-duration (onduration) timer (timer);
updating a starting position of a DRX onduration;
updating a DRX cycle;
updating length of a DRX onduration; and
length of a DRX (inactivity) inactivity timer.

An embodiment of this application further provides a network-side device, including a processor and a communication interface. This network-side device embodiment corresponds to the foregoing network-side device method embodiment. All processes and implementations in the foregoing method embodiment are applicable to this network-side device embodiment, with the same technical effect achieved.

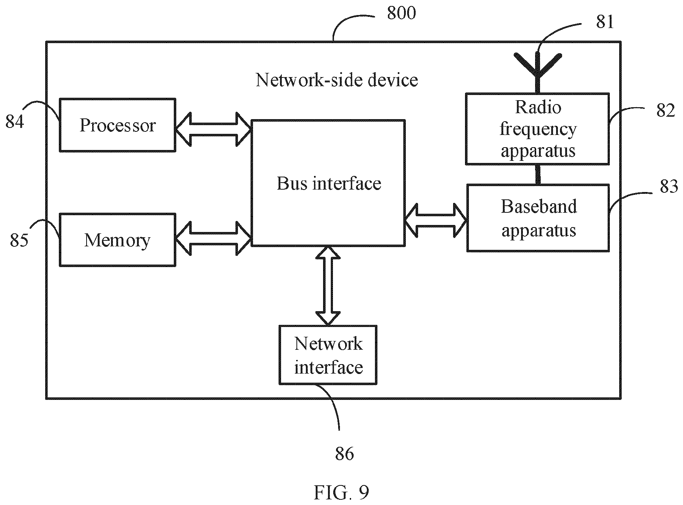

Specifically, an embodiment of this application further provides a network-side device. As shown in FIG. 9, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and transmits the received information to the baseband apparatus 83 for processing. In a downlink direction, the baseband apparatus 83 processes to-be-sent information, and transmits the information to the radio frequency apparatus 82; and the radio frequency apparatus 82 processes the received information and then transmits the information out through the antenna 81.

The method executed by the network-side device in the foregoing embodiments may be implemented on the baseband apparatus 83. The baseband apparatus 83 includes a baseband processor.

The baseband apparatus 83 may include, for example, at least one baseband board, where a plurality of chips are disposed on the baseband board. As shown in FIG. 9, one of the chips is, for example, a baseband processor, and connected to the memory 85 through a bus interface, to invoke the program in the memory 85 to perform the operations of the network device shown in the foregoing method embodiment.

The network-side device further includes a network interface 86, where the interface is, for example, a common public radio interface (common public radio interface, CPRI).

Specifically, the network-side device 800 in this embodiment of this invention further includes an instruction or program stored in the memory 85 and capable of running on the processor 84. The processor 84 invokes the instruction or program in the memory 85 to perform the foregoing channel signal transmission method, with the same technical effects achieved. To avoid repetition, details are not described herein.

An embodiment of this application further provides a readable storage medium, where a program or an instruction is stored in the readable storage medium. When the program or the instruction is executed by a processor, the processes of the foregoing embodiment of the channel signal transmission method can be implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

In addition, an embodiment of this application provides a chip. The chip includes a processor and a communications interface. The communications interface is coupled to the processor. The processor is configured to run a program or instructions to implement each process of the embodiment of the channel signal transmission method, with the same technical effect achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing channel signal transmission method embodiments, with the same technical effects achieved. To avoid repetition, details are not described herein again.

An embodiment of this application further provides a communication system, including a network-side device and a terminal. The network-side device may be configured to execute the steps of the foregoing channel signal transmission method, and the terminal may be configured to execute the steps of the foregoing channel signal transmission method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A channel signal transmission method, comprising: transmitting, by a network-side device, a control signal and/or a control channel, wherein the control signal and/or control channel comprises at least one of the following:

   a sequence part; and
   an information bit part; wherein
   the sequence part and/or the information bit part indicates at least one of the following:

   a behavior in a specific radio resource control RRC state; and
   the control signal and/or control channel comprises specific control information.

**2.** The method according to claim 1, wherein the sequence part comprises at least one of the following:

a synchronization sequence; and
an indication information sequence.

**3.** The method according to claim 2, wherein the sequence part comprises the synchronization sequence and the indication information sequence.

**4.** The method according to claim 3, wherein a transmission time of the indication information sequence is after a transmission time of the synchronization sequence.

**5.** The method according to claim 1, wherein the information bit part comprises at least one of the following:

control information bits; and
cyclic redundancy check CRC bits of the control information bits.

**6.** The method according to claim 2, wherein a purpose of the control signal and/or control channel is indicated by at least one of the following:

length of the synchronization sequence;
length of the indication information sequence;
length of the control information bits in the information bit part;
specific bits in the control information bits; and
CRC bits in the information bit part.

**7.** The method according to claim 6, wherein length and/or starting position of the specific bits is defined by a protocol or configured by a network-side device.

**8.** The method according to claim 6, wherein a purpose of the control signal and/or control channel is indicated by the CRC bits, comprising at least one of the following:

a specific radio network temporary identifier RNTI;
a specific scrambling sequence; and
a specific CRC generation polynomial.

**9.** The method according to claim 1, wherein the control signal and/or control channel satisfies at least one of the following:

modulated by binary on-off keying OOK or M amplitude shift keying M-ASK; and
encoded by Manchester Manchester, Biphase space coding FM0, Miller Miller, Walsh Walsh, or pulse interval encoding PIE encoding scheme.

**10.** The method according to claim 1, wherein the RRC state comprises at least one of the following:

RRC connected state;
RRC idle state; and
sleep state.

**11.** The method according to claim 1, wherein the specific control information comprises at least one of the following:

indication of whether to monitor for a paging signal;
tracking reference signal TRS availability indication;
indication of whether to monitor for a paging early indication;
indication of a paging group information update;
indication of whether a paging is a core network paging or an access network paging;
indication of a tracking area update;
indication of a system information update;
indication of switching of a monitoring parameter of a physical downlink control channel PDCCH;
indication of switching of a discontinuous reception DRX parameter;
a reference signal;
higher layer configuration of the channel;
indication of monitoring of specific signaling; and
indication of a source of the control signal and/or control channel.

**12.** The method according to claim 11, wherein the source of the control signal and/or control channel comprises at least one of the following:

a cell identifier;
a transmitting receiving point TRP identifier;
a terminal identifier; and
a relay node identifier.

**13.** The method according to claim 11, wherein the monitoring parameter of the PDCCH comprises at least one of the following:

whether to monitor the PDCCH;
a monitoring cycle of the PDCCH;
a search space for monitoring; and
a search space group for monitoring.

**14.** The method according to claim 11, wherein the DRX parameter comprises at least one of the following:

whether to enable an associated DRX on-duration onduration timer timer;
updating a starting position of a DRX onduration;
updating a DRX cycle;

updating length of a DRX onduration; and length of a DRX inactivity inactivity timer.

15. A channel signal transmission method, comprising: receiving, by a terminal, a control signal and/or a control channel, wherein the control signal and/or control channel comprises at least one of the following:

a sequence part; and
an information bit part; wherein
the sequence part and/or the information bit part indicates at least one of the following:

a behavior in a specific radio resource control RRC state; and
the control signal and/or control channel comprises specific control information.

16. The method according to claim 15, further comprising:

monitoring for, by the terminal, the control signal and/or control channel;
in a case that a target object is detected, parsing, by the terminal, the target object, or transmitting, by the terminal, the target object to a main receiver for parsing; and in a case that the target object is not detected, discarding or ignoring the control signal and/or control channel; wherein the target object comprises at least one of the following:

a specific sequence;
specific information bits; and
specific cyclic redundancy check CRC.

17. The method according to claim 16, wherein the target object is defined by a protocol or configured by a network-side device.

18. The method according to claim 15, wherein the sequence part comprises at least one of the following:

a synchronization sequence; and
an indication information sequence.

19. The method according to claim 18, wherein the sequence part comprises the synchronization sequence and the indication information sequence.

20. The method according to claim 19, wherein a transmission time of the indication information sequence is after a transmission time of the synchronization sequence.

21. The method according to claim 15, wherein the information bit part comprises at least one of the following:

control information bits; and
cyclic redundancy check CRC bits of the control information bits.

22. The method according to claim 18, wherein a purpose of the control signal and/or control channel is indicated by at least one of the following:

length of the synchronization sequence;
length of the indication information sequence;
length of the control information bits in the information bit part;
specific bits in the control information bits; and
CRC bits in the information bit part.

23. The method according to claim 22, wherein length and/or starting position of the specific bits is defined by a protocol or configured by a network-side device.

24. The method according to claim 22, wherein a purpose of the control signal and/or control channel is indicated by the CRC bits, comprising at least one of the following:

a specific radio network temporary identifier RNTI;
a specific scrambling sequence; and
a specific CRC generation polynomial.

25. The method according to claim 15, wherein the control signal and/or control channel satisfies at least one of the following:

modulated by binary on-off keying OOK or M amplitude shift keying M-ASK; and
encoded by Manchester Manchester, Biphase space coding FM0, Miller Miller, Walsh Walsh, or pulse interval encoding PIE encoding scheme.

26. The method according to claim 15, wherein the RRC state comprises at least one of the following:

RRC connected state;
RRC idle state; and
sleep state.

27. The method according to claim 15, wherein the specific control information comprises at least one of the following:

indication of whether to monitor for a paging signal;
tracking reference signal TRS availability indication;
indication of whether to monitor for a paging early indication;

indication of a paging group information update;

indication of whether a paging is a core network paging or an access network paging;

indication of a tracking area update;

indication of a system information update;

indication of switching of a monitoring parameter of a physical downlink control channel PDCCH;

indication of switching of a discontinuous reception DRX parameter;

a reference signal;

higher layer configuration of the channel;

indication of monitoring of specific signaling; and

indication of a source of the control signal and/or control channel.

28. The method according to claim 27, wherein the source of the control signal and/or control channel comprises at least one of the following:

a cell Cell identifier;

a transmitting receiving point TRP identifier;

a terminal identifier; and

a relay node identifier.

29. The method according to claim 27, wherein the monitoring parameter of the PDCCH comprises at least one of the following:

whether to monitor the PDCCH;

a monitoring cycle of the PDCCH;

a search space for monitoring; and

a search space group for monitoring.

30. The method according to claim 27, wherein the DRX parameter comprises at least one of the following:

whether to enable an associated DRX on-duration onduration timer timer;

updating a starting position of a DRX onduration;

updating a DRX cycle;

updating length of a DRX onduration; and

length of a DRX inactivity inactivity timer.

31. A channel signal transmission apparatus, comprising:

a transmitting module, configured to transmit a control signal and/or a control channel, wherein the control signal and/or control channel comprises at least one of the following:

a sequence part; and

an information bit part; wherein

the sequence part and/or the information bit part indicates at least one of the following:

a behavior in a specific radio resource control RRC state; and

the control signal and/or control channel comprises specific control information.

32. A channel signal transmission apparatus, comprising:

a receiving module, configured to receive a control signal and/or a control channel, wherein the control signal and/or control channel comprises at least one of the following:

a sequence part; and

an information bit part; wherein

the sequence part and/or the information bit part indicates at least one of the following:

a behavior in a specific radio resource control RRC state; and

the control signal and/or control channel comprises specific control information.

33. A terminal, comprising a processor and a memory, wherein the memory stores a program or instruction capable of running on the processor, and when the program or instruction is executed by the processor, the steps of the channel signal transmission method according to any one of claims 15 to 30 are implemented.

34. A network-side device, comprising a processor and a memory, wherein the memory stores a program or instruction capable of running on the processor, and when the program or instruction is executed by the processor, the steps of the channel signal transmission method according to any one of claims 1 to 14 are implemented.

35. A readable storage medium, wherein the readable storage medium stores a program or instruction, and when the program or instruction is executed by a processor, the steps of the channel signal transmission method according to any one of claims 1 to 14 are implemented, or the steps of the channel signal transmission method according to any one of claims 15 to 30 are implemented.

FIG. 1

FIG. 2

FIG. 3

A network-side device transmits a control signal and/or a control channel, where the control signal and/or control channel includes at least one of the following:
a sequence part; and
an information bit part; where
the sequence part and/or the information bit part indicates at least one of the following:
a behavior in a specific radio resource control RRC state; and
the control signal and/or control channel includes specific control information

101

FIG. 4

A terminal receives a control signal and/or a control channel, where the control signal and/or control channel includes at least one of the following:
a sequence part; and
an information bit part; where
the sequence part and/or the information bit part indicates at least one of the following:
a behavior in a specific radio resource control RRC state; and
the control signal and/or control channel includes specific control information

201

FIG. 5

Random access preamble/ synchronization signal | Indication information sequence | Control information bits

Random access preamble/ synchronization signal | Indication information sequence

Random access preamble/ synchronization signal | Control information bits

FIG. 6

600

Communication device

601 Processor ⟷ Memory 602

FIG. 7

700

Terminal

701 Radio frequency unit

Network module 702

710

Memory
709
Application program
Operating system

Audio output unit 703

704
Input unit
Graphics processing unit 7041
Microphone 7042

708 Interface unit

Processor

707
User input unit
7071 Touch panel
7072 Other input devices

706
Display unit
Display panel 7061

Sensor 705

FIG. 8

FIG. 9

## INTERNATIONAL SEARCH REPORT

| International application No. |
|---|
| **PCT/CN2023/107718** |

**A.    CLASSIFICATION OF SUBJECT MATTER**

H04W 52/02(2009.01)i

According to International Patent Classification (IPC) or to both national classification and IPC

**B.    FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 比特, 低功耗, 低功率, 唤醒, 控制, 信号, 信息, 前导, 无线资源控制, 序列, 用途, 状态, bit, low power, LP, wake up, signal, WUS, control, information, sequence, state, preamble, radio resource control, RRC, use

**C.    DOCUMENTS CONSIDERED TO BE RELEVANT**

| Category* | Citation of document, with indication, where appropriate, of the relevant passages | Relevant to claim No. |
|---|---|---|
| X | CN 113767681 A (ZTE CORP.) 07 December 2021 (2021-12-07) description, paragraphs 20-419, and figures 1-9 | 1-35 |
| A | CN 113647149 A (GUANGDONG OPPO MOBILE TELECOMMUNICATIONS CORP., LTD.) 12 November 2021 (2021-11-12) entire document | 1-35 |
| A | CN 113748718 A (TELEFONAKTIEBOLAGET LM ERICSSON (PUBL)) 03 December 2021 (2021-12-03) entire document | 1-35 |
| A | WO 2018175760 A1 (INTEL CORP. et al.) 27 September 2018 (2018-09-27) entire document | 1-35 |

☐ Further documents are listed in the continuation of Box C.     ☑ See patent family annex.

| *    Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **19 October 2023** | **23 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/107718**

| Patent document cited in search report | | | Publication date (day/month/year) | Patent family member(s) | | | Publication date (day/month/year) |
|---|---|---|---|---|---|---|---|
| CN | 113767681 | A | 07 December 2021 | None | | | |
| CN | 113647149 | A | 12 November 2021 | None | | | |
| CN | 113748718 | A | 03 December 2021 | US | 2022182936 | A1 | 09 June 2022 |
| | | | | WO | 2020204804 | A1 | 08 October 2020 |
| | | | | EP | 3949542 | A1 | 09 February 2022 |
| | | | | ZA | 202108524 | B | 21 December 2022 |
| | | | | CO | 2021014035 | A2 | 29 October 2021 |
| | | | | KR | 20210146380 | A | 03 December 2021 |
| | | | | JP | 2022528893 | A | 16 June 2022 |
| | | | | JP | 7312848 | B2 | 21 July 2023 |
| WO | 2018175760 | A1 | 27 September 2018 | US | 2020029302 | A1 | 23 January 2020 |
| | | | | US | 11284372 | B2 | 22 March 2022 |
| | | | | US | 2022201649 | A1 | 23 June 2022 |
| | | | | EP | 3603223 | A1 | 05 February 2020 |
| | | | | EP | 3603223 | A4 | 13 January 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210845341